# EUROPÄISCHE PATENTANMELDUNG

(11) **EP 1 293 709 A1**
(43) Veröffentlichungstag der Anmeldung: **19.03.2003**
(21) Anmeldenummer: 01121574.6
(22) Anmeldetag: 10.09.2001
(51) Int. Cl.: F16J 15/10, F16L 23/22

(54) **Weichstoffdichtung**

(71) Anmelder: Frenzelit-Werke GmbH & Co. KG, 95460 Bad Berneck (DE)
(72) Erfinder: Kos, Nikolaus, 95503 Hummeltal (DE); Abt, Wolfgang, 95126 Schwarzenbach/Saale (DE)
(74) Vertreter: Becker Kurig Straus

(57) **Zusammenfassung**

Die Erfindung betrifft eine Dichtung, die mindestens zwei ineinandergefügte Dichtungskörper (A, B) unterschiedlichen Materials aufweist, wobei die Außenfläche des innenliegenden Dichtungskörpers (A) und die Innenfläche des benachbarten außenliegenden Dichtungskörpers (B) formschlüssig miteinander verbunden sind, wobei der innenliegende Dichtungskörper (A) einen thermoplastischen Kunststoff aufweist, und der außenliegende Dichtungskörper (B) ein Weichstoffdichtungsmaterial oder einen thermoplastischen Kunststoff aufweist, das eine größere Temperaturbeständigkeit und mechanische Standfestigkeit als die des innenliegenden Dichtungskörpers (A) aufweist, wobei der thermoplastische Kunststoff aus der Gruppe, bestehend aus Polyaryletheretherketon, Polyaryletherketon, Polyphenylensulfid, Polyarylsulfon, Polyethersulfon, Polyimid, Polyamid, Polyamidimid, fluorhaltigen Polymeren, ausgewählt ist und das Weichstoffdichtungsmaterial des Dichtungskörpers (B) aus armierungs- und blattbildenden Fasern, Füllstoffen, organischem Bindemittel und gegebenenfalls weiteren Zusatzstoffen, aus der Gruppe der Vulkanisations- und Verarbeitungshilfsmittel besteht, wobei als armierungs- und blattbildende Fasern 2,0 - 5 Gew.% P-Polyaramidfasern sowie wenigstens 60 Gew.% Pudergraphit mit einer Kornverteilung von 90% < 70 µm oder expandierter Graphit eingesetzt wird.

## Beschreibung

Die vorliegende Erfindung betrifft Dichtungen, insbesondere Flachdichtungen in Ringform zur Flanschabdichtung. Die erfindungsgemäßen Dichtungen sind gedacht für die Anwendung zwischen glatten Dichtleisten und können beispielsweise zum Abdichten von fluiden Produkten enthaltenden Räumen wie Rohrleitungen, Behältern, Reaktionsräumen etc. an Stellen verwendet werden, an denen diese Räume mindestens einen Übergang zu einem anderen, materiell zu dem ersten Raum getrennten Konstruktions- oder Funktionsteil der technischen Anordnung, zu der sie gehören, haben. Die Funktion derartiger Dichtungen ist es, bei Vorliegen von Druckdifferenzen zwischen dem Behälterinneren und dem Raum außerhalb des Behälters ein Austreten von Fluiden aus einem solchen Behälter oder Behältersystem oder ein unerwünschtes Eindringen von Fluiden in den Behälter oder das Behältersystem möglichst weitgehend zu verhindern.

Außerdem sollen auch bei Abwesenheit der Druckdifferenzen Stoffaustauschvorgänge zwischen dem Behälterinnenraum und dem Behälteraußenraum durch Diffusion soweit wie möglich unterbunden werden.

Die eingesetzten Dichtungen kommen aber auch mit dem durch eine Rohrleitung geleiteten Medium in Kontakt. Bei diesem Medium kann es sich um aggressive, die Dichtung angreifende Medien handeln. Es kommen aber auch Anwendungen z.B. in der Papierindustrie, in der petrochemischen und nahrungsmittelerzeugenden Industrie in Betracht. Daher soll das Material gegenüber dem abzudichtenden Mediums weitgehend inert und undurchlässig sein.

Fluorkunststoffe, d.h. reines Polytetrafluorethylen genügt zwar den chemischen Anforderungen, hat aber für viele der oben beschriebenen Anwendungszwecke ein unzureichendes Rückstellvermögen und zu geringe Formbeständigkeit. Durch Modifikation des Materials lassen sich zwar die Formbeständigkeit und das Rückstellvermögen verbessern. Jedoch kann man immer noch einen Spannungsabfall (Relaxation) der Schraubenkräfte, hervorgerufen durch Kaltfluß, bei derartigen Polytetrafluorethylen (PTFE)-Dichtungen herstellen.

Dichtungen aus PTFE haben den Vorteil der hohen Gasdichtheit, eine universelle Medienbeständigkeit, sehr gute Anpassungsfähigkeit, Sterilisierbarkeit, und sie sind für Lebensmittel geeignet.

Neben Flachdichtungen auf Basis von Fluorkunststoff (vgl. EP 0 442 550 B1, DE 198 04 289 A1 sowie DE 36 38 703 C1) gibt es auch solche auf Basis von geblähten Graphit (DE-A-12 53 130, DE-A-24 41 602, DE-A-32 44 595, DE 43 42 811). Graphitpartikel lassen sich durch Schockverdampfung von zwischen den Graphitschichten eingelagerten Fremdstoffen auf ein Vielfaches ihres ursprünglichen Volumens aufblähen. Daraus hergestellte Preßkörper haben eine quer zur Preßrichtung verlaufende Schichtstruktur mit guter Elastizität und sind auch für Flachdichtungen geeignet.

Zusammenfassend kann festgestellt werden, daß Dichtungen aus Weichstoffen eine sehr gute mechanische Standfestigkeit, eine gute thermische Standfestigkeit, ein geringes Kriechverhalten haben, weiterhin steht eine große Werkstoffpalette zur Verfügung. Weichstoffdichtungen sind im übrigen sehr kostengünstig.

Auch bekannt sind Dichtungsringe, die aus expandiertem und gepreßtem Graphitpulver bestehen, in welchem die Graphitpartikel unter Belassung von Hohlräumen durch Brücken aus Tetrafluorethylen-Perfluorpropylen-Copolymerisat miteinander verbunden sind (vgl. DE-A-26 11 523).

DE 37 17 781 A1 beschreibt ein Verfahren zur Herstellung von Dichtungsringen, die aus einem Ring (10) aus hartem Material und einem in radialer Richtung daran angeordneten Ring (11) aus weichem Dichtungsmaterial bestehen. Von einem Rohr aus weicherem Dichtungsmaterial werden dabei Ringe (11) abgetrennt, die mit den Ringen (10) aus hartem Material, wie z.B. Metall, unter Bildung von Dichtungsringen, insbesondere durch klemmendes Ineinanderstecken, verbunden werden. Die Ringe aus hartem Material werden dabei vorzugsweise durch Stanzvorgänge herstellt.

DE 298 17 199 U1 beschreibt Rohrflanschdichtungen mit einem inneren Dichtungsbereich aus Gummi und einem daran anschließenden Dichtungsring aus härterem Material, wie z.B. Metall. Derartige Dichtungen werden für thermisch höher belastete Gasleitungen oder Trinkwasserleitungen mit angeschlossenen Feuerlöschsystemen eingesetzt.

DE 20 48 569 C2 beschreibt eine Dichtung zum Abdichten runder Flächen mit einem Dichtungsring aus Gummi oder Kunststoff und einem daran angeschlossenen Metallring.

Die DE PS 856 815 vom 8. Juli 1949 beschreibt eine Dichtung aus einem elastisch verformbaren Dichtungsring und einem denselben in einer radialen Richtung begrenzenden formfesten Anschlagring.

EP 00 30 843 B1 beschreibt eine Flachdichtung, enthaltend einen Schichtstoff aus Schichten von Folie aus geblähtem Graphit und einer metallischen Verstärkungsschicht, wobei die Graphitfolienschicht eine Kante der Verstärkungsschicht überlappt und einhüllt, die bei Verwendung an einer aggressiven Umgebung, gegen die abgerichtet werden soll, anliegt, wobei die Graphitfolienschicht in einer verstärkungsfreien Verlängerung dieser Kante definiert ist.

EP 1 072 828 A2 (Gießener Gummiwarenfabrik) beschreibt einen Dichtungsring aus zwei oder mehreren Ringen aus unterschiedlichen Materialien, welche konzentrisch ineinander liegen und wobei die Außenfläche der innenliegenden Ringe und die Innenfläche der benachbarten außenliegenden Ringe miteinander verbunden sind. Die einzelnen Ringe gemäß EP 1 072 828 bestehen aus weniger beständigem Elastomer-Material bzw. etwas mehr beständigerem Elastomer-Material, wie z.B. Gummi. Bekannt ist jedoch, dass elastomere Materialien nur eine bestimmte Temperaturbeständigkeit aufweisen und daher die Notlaufeigenschaften von derartigen Flachdichtungen stark beeinträchtigt sind.

Zusammenfassend kann festgestellt werden, daß die bekannten Flachdichtungen den Anforderungen der modernen Dichtungstechnik in Bezug auf Dichtigkeit und Druckfestigkeit, in Bezug auf ihre Materialauswahl nicht voll entsprechen und verbesserungsbedürftig sind.

Es ist daher Aufgabe der Erfindung, eine Flachdichtung von großer Druckfestigkeit zu schaffen, die sich durch eine besondere Materialauswahl der Dichtungskomponenten auszeichnet und die für Dauerbetriebstemperaturen von mindestens 150°C geeignet ist, mit der verbesserte, d.h. kleinere Lekagewerte als 0,01 mg/(m*s) erreicht werden können, und die auch die geforderten Notlaufeigenschaften aufweist.

Diese Aufgabe wird durch die Dichtung gemäß Patentanspruch 1 gelöst, wobei die erfindungsgemäße Dichtung aus mindestens zwei ineinandergefügten Dichtungskörpern (A, B), insbesondere Dichtungsringen (A, B), aus unterschiedlichem Material besteht. Der zweite außen-liegende Dichtungskörper (B) weist erfindungsgemäß eine größere Temperaturbeständigkeit und mechanische Standfestigkeit als die des Dichtungskörpers (A) auf. Die Dichtungskörper bzw. -ringe (A, B) liegen vorzugsweise konzentrisch ineinander, wobei die Außenfläche des innenliegenden Dichtungskörpers (A) und die Innenfläche des benachbarten außenliegenden Dichtungskörpers (B) formschlüssig miteinander verbunden sind. Die Dichtungskörper (A, B), d.h. insbesondere die Dichtungsringe (A, B) lassen sich kostengünstig durch Ineinanderfügen von zwei entsprechenden Stanzteilen herstellen. Die Außendurchmesser von Dichtungskörper (A) und der Innendurchmesser von Dichtungskörper (B) werden dabei so gewählt, daß beim Ineinanderfügen ein leichter Preßsitz entsteht.

In den weiteren Unteransprüchen sind vorteilhafte Ausführungsformen der Erfindung enthalten.

Alternativ oder zusätzlich kann auch die Fixierung durch eine Zwischenschicht aus einem Material hergestellt werden, das die beiden Dichtungskörper (A, B) miteinander verbindet. Diese Schicht kann aus einem geeigneten Kleber, z.B. einen Kontaktkleber bestehen.

Nach dem Ineinanderfügen der Dichtungskörper (A) und (B) ist es vorteilhaft, die komplette erfindungsgemäße Dichtung zusätzlich bei geringer Flächenpressung zu planieren oder zu verpressen (ca. 1,0 - 1,5N/mm2/Raumtemperatur/max. 30 Sekunden).

Als erfindungsgemäße Werkstoffe für den innenliegenden Dichtungskörper (A), der vorzugsweise ein Innenring sein kann, kommen thermoplastische Kunststoffe in Betracht, die mit organischen und anorganischen Fasern verstärkt sein können. Unter thermoplastischen Kunststoffen werden erfindungsgemäß Materialien aus der Gruppe Polyaryletheretherketon, Polyvenylensulfid, Polyarylsulfon, Polyethersulfon, Polyimid, Polyamid, Polyimidimid, und fluorhaltige Polymere verstanden. Elastomere als Werkstoffe, wie z.B. Gummi und wie sie in EP 10 72 828 A2 beschreiben werden, sind erfindungsgemäß ausgeschlossen, da diese Werkstoffgruppe nicht die gewünschten Eigenschaften, wie z.B. Hochtemperaturbeständigkeit, aufweist. Hierdurch sind die Notlaufeigenschaften der Dichtung stark beeinträchtigt. Erfindungsgemäß werden daher fluorhaltige Polymere aus der Gruppe aus Polytetrafluorethylen, Polytrifluorchlorethylen, Tetrafluorethylen-Hexafluorproplen-Copolymerisat, Copolymerisate von Tetrafluorethylen mit Perfluoralkyvinylether, Copolymerisate mit Ethylen und Tetrafluorethylen, Polyvinylidenfluorid, Terpolymerisate aus Ethylen, Tetrafluorethylen und Vinyliderfluorid eingesetzt.

Ganz besonders bevorzugt sind erfindungsgemäß reines (ungefülltes) Polytetrafluorethylen (PTFE), gefülltes PTFE, modifizierte Fluorpolymere wie z.B. TFM, PFE, FEP (gefüllt oder ungefüllt), gefüllter oder ungefüllter Hochleistungskunststoff mit geeigneter Temperatur- und Medienbeständigkeit wie z.B. Polyetheretherketon (PEEK).

Als Werkstoffe für den benachbarten außenliegenden Dichtungskörper (B), insbesondere für den Außenring (B), kommt erfindungsgemäß ein Weichstoffdichtungsmaterial aus armierungs- und blattbildenden Fasern, Füllstoffen, organischen Bindemitteln und gegebenenfalls weiteren Zusatzstoffen aus der Gruppe der Vulkanisations- und Verarbeitungshilfsmittel in Betracht.

Als armierungs- und blattbildende Fasern kommen erfindungsgemäß 2 bis 5 Gew.% P-Polyaramidfasern oder insbesondere eine Mischung aus 0,5 bis 1 Gew.% nicht fibrillierte P-Polyaramidfasern mit einer Bruchdehnung von < 5 % (bis 200°C), mit einer Länge von 2 bis 4 mm, mit 2 bis 4 Gew.% fibrillierten P-Polyaramidfasern in Betracht. Weiterhin sind in dem Weichstoffdichtungsmaterial wenigstens 60 Gew.% Pudergraphit mit einer Kornverteilung von 90 % < 70 µm oder expandierter Graphit vorhanden.

Beispiele für solche erfindungsgemäßen Weichstoffdichtungswerkstoffe auf Basis von Fasern mit oder ohne Einlagen sind z.B. das Material NOVAPRESS® universal, oder NOVATEC® Premium der Firma Frenzelit GmbH & Co. KG, Bad Berneck. Bei letzterem Material handelt es sich um einen Werkstoff aus 70 Gew.% Pudergraphit, 0,9 Gew.% P-Polyaramidstapelfasern, 3,1 Gew.% fibrillierten P-Polyaramidfasern, 7 Gew.% Bindemittel, 1,5 Gew.% Vulkanisations- bzw. Verarbeitungshilfsmittel sowie 17,5 Gew.% Füllstoffe. Weiterhin kann Flachdichtungsmaterial auf der Basis von expandiertem Graphit mit oder ohne Einlagen wie z.B. das Material novaphit ® SSTC der Firma Frenzelit GmbH & Co. KG Bad Berneck, verwendet werden. Alternativ kann auch ein Dichtungswerkstoffmaterial für den außenliegenden Dichtungskörper (B) verwendet werden, das aus 10 bis 70 Gew.% Plättchengraphit, 5 bis 30 Gew.% Prozeßfasern, wie z.B. para-Polyaramidfasern und 5 bis 20 Gew.% elastischen Bindemitteln besteht. Bezüglich dieser Zusammensetzung des Dichtungswerkstoffes verweisen wir auf die EP 0 308 471 B1 (Frenzelit).

Der Dichtungswerkstoff für den außenliegenden Dichtungskörper (B) kann somit aus anorganischen und/oder organischen Fasern, mineralischen und/oder synthetischen Füllstoffen und Naturund/oder Synthesekautschuk als Bindemittel in variablen Anteilen bestehen.

Der Dichtungswerkstoff für den außenliegenden Dichtungskörper (B) kann in bekannter Weise auf einer Papiermaschine oder auf einem Kalander hergestellt werden. Die Dichtungskörper, insbesondere die Dichtungsringe können aus diesem Material ausgeschnitten oder ausgestanzt werden.

In einer anderen Ausführungsform der Erfindung kann Flachdichtungswerkstoffmaterial auf Basis von PTFE, mit oder ohne Einlagen, für den Dichtungskörper (B) eingesetzt werden.

Wesentlich ist jedoch, daß man erfindungsgemäß für den Dichtungskörper (B), der insbesondere als Außenring vorliegt, das Werkstoffmaterial so wählt, daß die Temperaturbeständigkeit und die mechanische Standfestigkeit größer ist als die des innenliegenden Dichtungskörpers (A) bzw. des Innenrings (A). Bei einer erfindungsgemäßen Dichtung übernimmt nämlich der Dichtungskörper (A) bzw. der Innenring (A) im wesentlichen die abdichtende Funktion, der außenliegende Dichtungskörper bzw. der Außenring (B) dagegen die Kraftübertragung, d.h. die mechanische Funktion. Damit werden die materialbedingten Nachteile des thermoplastischen Polymers und insbesondere von PTFE wie das Fließen und Kriechen unter Last vermieden. Ein entsprechender Kennwert für die Dichtungen ist hierzu der Warmsetzwert nach DIN 28090-2. Die nachfolgende Tabelle 1 zeigt typische Werte. Dabei ist zu beachten, daß die geprüften handelsüblichen PTFE-Compounds trotz deutlich niedriger Prüfparameter wesentlich ungünstigere, d.h. größere Warmsetzwerte aufweisen.

Der erfindungsgemäße Dichtungskörper (B) aus PTFE bzw. der Dichtungskörper (A) aus Fluorkunststoff kann nach Verfahren hergestellt werden, die für die Verarbeitung von Polytetrafluorethylen bewährt sind. Beispielsweise wird hier auf die DE-PS 36 38 703 verwiesen.

**Tabelle 1**

| **Warmsetzwert** _{ε}WSW/T - **DIN 28090-2** | | | |
|---|---|---|---|
| Type DIN 28090-1 | **TF** | **FA** | **GR** |
| Qualität | PTFE Handelsüblich | NOVATEC *PREMIUM* | novaphit SSTC |
| Prüfparameter: | | | |
| Temperatur (°C) | 150 | 200 | 300 |
| Flächenpressung (N/mm²) | 20 | 50 | 50 |
| **Warmsetzwert** _{**ε**}_{WSW/T} | **10...35%** | **6%** | **2%** |
| Dichtungen auf Basis von: FA = Fasern, TF = Polytetrafluorethylen, GR = expandierter Graphit | | | |

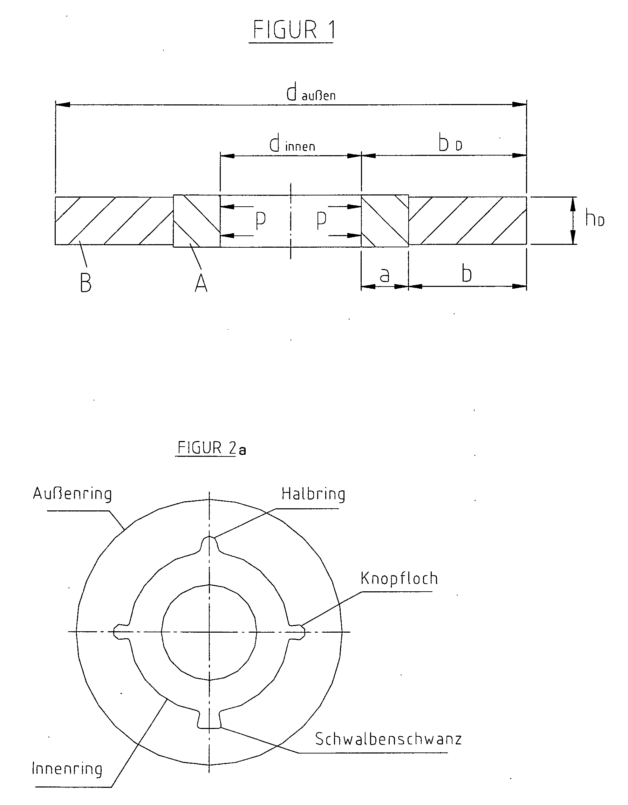

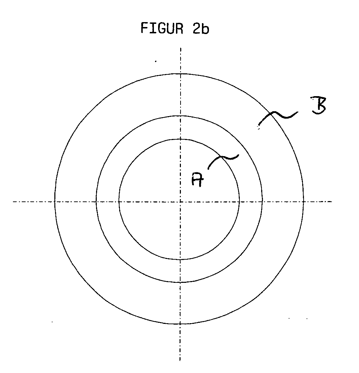

Wie oben schon erläutert wurde, läßt sich die erfindungsgemäße Dichtung kostengünstig durch Ineinanderfügen von zwei entsprechenden Stanzteilen herstellen. Der Außendurchmesser von Dichtungskörper (A) und der Innendurchmesser von Dichtungskörper (B) werden dabei so gewählt, daß beim Ineinanderfügen ein leichter Preßsitz entsteht. Alternativ kann auch die Fixierung durch eine geeignete Kleberschicht, wie z.B. ein Kontaktkleber oder eine klebstofffreie Verbindung durch Verwendung oberflächenaktiver Substanzen wie z.B. Silane, Polysiloxane etc. erfolgen. Bei größeren Ringbreiten (bD) (siehe Fig. 1) kann Alternativ oder zusätzlich auch eine mechanisch-formschlüssige Verbindung hergestellt werden. Fig. 2 zeigt 4 Beispiele für die Ausführung von mechanischen, formschlüssigen Verbindungen zwischen dem erfindungsgemäßen Innenring (A) und Außenring (B) als Alternative bzw. zusätzlich zu dem Preßsitz oder der Verklebung.

Das Verhältnis von Ringbreite von Innenring (A) zu Ringbreite Außenring (B) "a" : "b" beträgt bevorzugt 1:3 bis 1:5; bei großen Nennwerten 1:4 bis 1:5. Es ist jedoch auch jede andere Teilung von bD möglich. Auf diese Weise besteht eine individuelle Anpassungsfähigkeit an die jeweiligen Anforderungen und Dichtringabmessungen.

In einer besonderen Ausführungsform der Erfindung ist vorgesehen, dass die einzelnen Dichtungsringe eine unterschiedliche Schichtdicke aufweisen. Durch eine unterschiedliche Wahl der Dichtungsdicke hD für Innenring (A) und Außenring (B) kann einem unterschiedlichen Verformungsverhalten der beiden Werkstoffe Rechnung getragen werden. Beispiel: Als Außenring (B) wird ein Flachdichtungswerkstoff auf Basis von expandiertem Graphit (GR) z.B. novaphit ® SSTC mit Einlage aus Streckgitter verwendet, der ein großes Verformungsverhalten unter Last aufweist (z.B. 50% Dickabnahme bei 50 N/mm2 Flächenpressung). Dann ist es vorteilhaft, für einen Innenring (A) aus reinem PTFE die Dichtungsdicke hD kleiner (z.B. 75 %) als die des Außenringes (B) zu wählen (vgl. Anspruch 2).

Gegenüber einer handelsüblichen Weichstoffdichtung mit PTFE-Hülle bestehen u.a. folgende Vorteile:
- hinreichend dicke, diffusionsdichte Sperrschicht aus PTFE,
- keine Gefahr des Aufplatzens der PTFE-Hülle durch Beschädigung oder Materialermüdung, einhergehend mit dem Verlust der Dichtwirkung und der Medienbeständigkeit,
- Höhere zulässige Flächenpressungen im Einbau und Betriebszustand, da diese nicht durch das PTFE begrenzt, sondern durch die Tragfähigkeit des Außenrings (B) bestimmt, werden.

Gegenüber handelsüblichen Weichstoffdichtungen auf Basis von Fasern (FA) oder Basis von expandiertem Graphit (GR) bestehen u.a. folgende Vorteile:
- Die Medienbeständigkeit gegenüber Säuren, Laugen und Lösungsmittel ist erhöht; entsprechend dem verwendeten Werkstoff für Innenring (A)
- Die Leckagerate einer erfindungsgemäßen Dichtung, geprüft nach DIN 28090-2, ist kleiner/gleich 0,001 mg/(s*m). Dichtungen auf Basis FA und GR haben hingegen eine typische Leckagerate von 0,1 mg/(s*m).
- Die erfindungsgemäßen Dichtungen können aufgrund der niedrigen Leckagerate als "hochwertige Dichtungen" im Sinne der Anforderungen nach TA-Luft gelten.
- Die erforderliche Mindestflächenpressung im Einbauzustand sVU/L, nach DIN 28090-1, ist sehr niedrig. Sie beträgt z.B. für die Dichtigkeitsklasse L = 0,01 mg/(s*m) (TA-Luft) kleiner/gleich 15 N/mm2 bei einem Innendruck von 40 bar. Diese Flächenpressung kann in allen Normflanschen auch unter ungünstigen Bedingungen (z.B. Flansche der Nennweite DN 50 in Verbindung mit Schraubengüte 5.6) sicher erreicht werden.
- Die maximale zulässige Flächenpressung im Einbauzustand sVO, nach DIN 28090-1, ist dagegen weitgehend so groß wie die des verwendeten Außenrings aus Weichstoffdichtungsmaterial. Voraussetzung hierfür ist, daß die Ringbreite des Innenrings (Maß "a") hinreichend klein im Verhältnis zur Ringbreite des Außenrings (Maß "b") ist. Bei Dichtungen aus reinem oder gefülltem PTFE ist dagegen die maximale zulässige Flächenpressung aufgrund der materialbedingten Neigung zum Kaltfluß begrenzt.

Neben der zu erwartenden Verbesserung der Medienbeständigkeit wurde also überraschender Weise auch eine signifikante Verbesserung der Dichtheit gefunden.

Gegenüber handelsüblichen Weichstoffdichtungen auf Basis von PTFE (TF) bestehen u.a. folgende Vorteile:
- Kein Spannungsabfall (Relaxation) der Schraubenkräfte hervorgerufen durch Kaltfluß, da sich der PTFE-Innenring an dem Außenring (B) abstützt.
- Bei einem Versagen des PTFE-Innenrings (A) (z.B. bei einem Störfall mit T>250°C) bestehen noch Notlaufeigenschaften durch den Außenring (B).
- Konzeptionsbedingt sind teure PTFE-Spezialcompounds zur Reduzierung des Kaltflusses nicht erforderlich. Entsprechende Compounds sind z.B. beschrieben in den Patentschriften DE 36 38 703 C2 und EP 0 442 550 B1
- Wirtschaftlicher, da weniger PTFE je Dichtung benötigt wird.

Die Erfindung wird nun anhand der folgenden Beispiele und Zeichnungen näher beschrieben. Darin zeigt:
- Figur 1: den prinzipiellen Aufbau einer erfindungsgemäßen Dichtung im Querschnitt;
- Figur 2a, 2b: eine Draufsicht auf eine erfindungsgemäße Dichtung mit Innen- und Außenring mit vier Beispielen für die Ausführungsform von mechanischen, formschlüssigen Verbindungen zwischen Innenring und Außenring als Alternative bzw. zusätzliche zu Preßsitz oder Verklebung (vgl. Figur 2b);
- Figur 3: die gemessene Leckagerate für eine erfindungsgemäße Dichtung mit einem Außenring auf Werkstoffbasis FA (Fasern), d.h. NOVATEC® PREMIUM der Frenzelit, Bad Berneck, mit und ohne Innenring aus reinem ungefüllten PTFE (Lubriflon®), als Prüfmittel wurde Stickstoff verwendet;
- Figur 4: die Leckagerate für eine erfindungsgemäße Dichtung auf Werkstoffbasis GR (expandierter Graphit), d.h. auf Basis novaphit® SSTC, mit und ohne Innenring aus reinem ungefüllten PTFE (Lubriflon®), als Prüfmittel wurde Stickstoff verwendet;

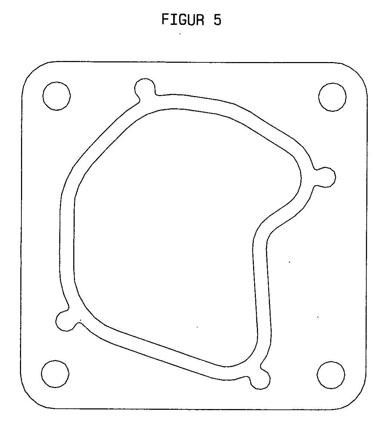

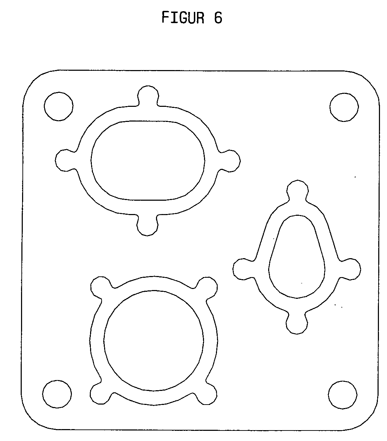

- Figuren 5 und 6: verschiedene geometrische Formen der erfindungsgemäßen Dichtung, nämlich aus Bogensegmenten bestehende Flächengebilde;

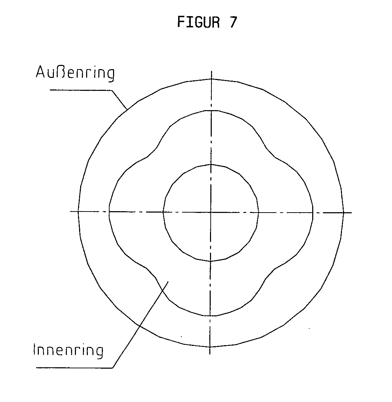

- Figur 7: eine erfindungsgemäße Dichtung, bei der in Abstimmung mit den Schraubenkräften die Dichtungsbreite (hD) variabel gestaltet ist und somit eine nahezu gleichmäßige Flächenpressung am außenliegenden Dichtungskörper (B) erzielbar ist;

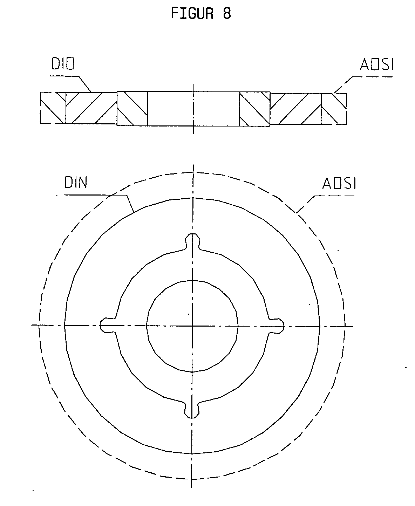

- Figur 8: eine erfindungsgemäße Dichtung, sowohl im Querschnitt als auch eine Draufsicht, wobei der Innenring (A) für DIN- und ANSI-Flansche identisch ist und ausschließlich der Außenring, (b) im Außendurchmesser (d_{außen}) unterschiedlich ist.

In Figur 1 haben die genannten Buchstaben die folgende Bedeutung:
- A =: Innenring aus PTFE
- B =: Außenring aus Weichstoffdichtungswerkstoff
- a =: Ringbreite Innenring
- b =: Ringbreite Außenring
- b_{D} =: Ringbreite des gesamten Dichtrings
- h_{D} =: Dichtungsdicke
- p =: Innendruck

In der erfindungsgemäßen Ausführungsform gemäß Figur 1 weist der Dichtungskörper (A), d.h. der Innenring, eine Dichtungsdickenabmessung h_{D} auf, die wenigstens 10 %, insbesondere 25 % größer ist als die Dickenabmessung h_{D} des Dichtungskörpers (B). Dies geschieht in Abstimmung der Funktionalität im Bezug auf Kompressibilität und Rückfederung des Außenrings. Das erfindungsgemäße Ausführungsbeispiel gemäß Figur 1 für einen Dichtungsring besteht aus zwei ineinanderliegenden, konzentrischen Ringen (A) und (B), welche miteinander verbunden sind. Beide Ringe (A), (B) haben einen rechteckigen Querschnitt, sodass der Dichtungsring insgesamt auch einen rechteckigen Querschnitt hat.

Der Ring (B) ist dünner ausgeführt und besteht aus dem Material NOVATEC® PREMIUM der Firma Frenzelit, Bad Berneck. Der Innenring besteht aus reinem, ungefülltem PTFE. Der Ring (A) bekommt die notwendige Stabilität durch den äußeren Ring (B). Somit erhält man durch die Kombination der beiden Ringe (A) und (B) einen Dichtungsring, der zum Abdichten von Rohrverschraubungen für Leitungen für aggressive Medien geeignet ist und der auch gleichzeitig Notlaufeigenschaften aufgrund der Materialauswahl hat.

Die erfindungsgemäße Ausführungsform gemäß Figur 2a zeigt vier Beispiele für Verbindungen zwischen Innen- und Außenring, wobei beispielhaft die Ausführungsformen als so genannter Halbring, Knopfloch, Schwalbenschwanz, gezeigt werden. Figur 2b zeigt dagegen eine erfindungsgemäße Ausführungsform, bei der Innen- und Außenring ohne Verklebung ineinander gefügt sind. Die erfindungsgemäße Ausführungsform gemäß Figur 2b besteht wiederum aus zwei ineinanderliegenden, konzentrischen Ringen (A) und (B), welche miteinander verbunden sind. Beide Ringe (A) und (B) haben einen rechteckigen Querschnitt, sodass der Dichtungsring insgesamt auch einen rechteckigen Querschnitt hat. Für den Außenring (B) wird wiederum das Dichtungsmaterial NOVATEC® PREMIUM der Firma Frenzelit eingesetzt, während der Innenring aus reinem, ungefülltem PTFE besteht.

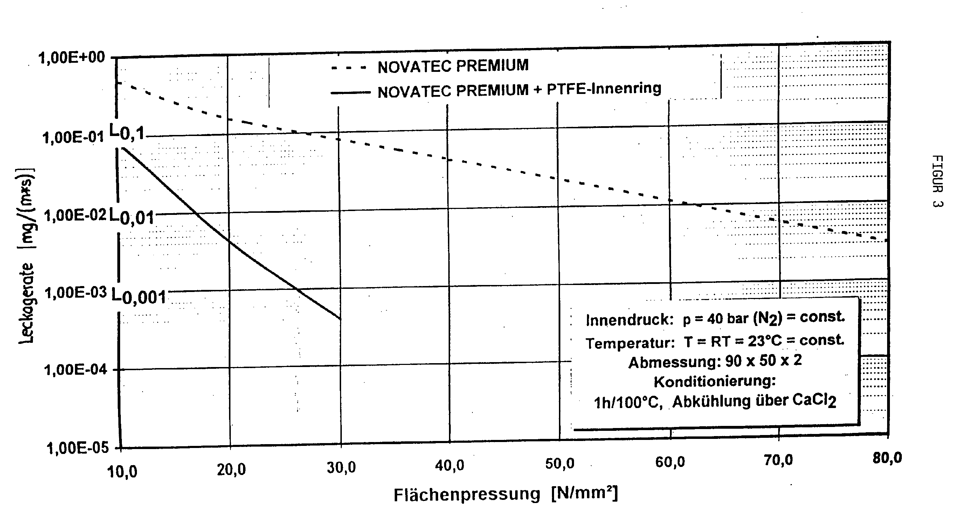

Das erfindungsgemäße Ausführungsbeispiel für einen Dichtungsring gemäß Figur 3 besteht aus zwei ineinanderliegenden konzentrischen Ringen, ähnlich wie bei der Ausführungsform von Figur 2b, welche miteinander verbunden sind.

### Beispiele

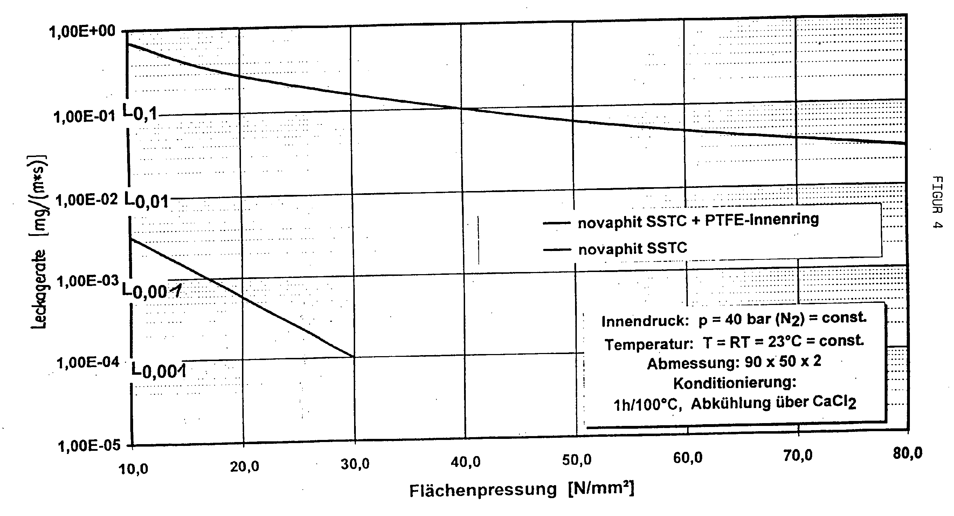

Tabelle 2 zeigt Meßwerte für spezifische Leckagerate nach DIN 28090-2. Fig. 3 zeigt die gemessene Leckagerate für eine erfindungsgemäße Dichtung mit einem Außenring auf Werkstoffbasis NOVATEC ® PREMIUM (FA). Fig. 4 zeigt die Leckagerate für eine erfindungsgemäße Dichtung mit einem Außenring auf Werkstoffbasis novaphit ® SSTC (GR). Novaphit ® SSTC ist ein Laminat, hergestellt aus Folien aus expandiertem Graphit mit einem Reinheitsgrad von mindestens 98% und einer mittigen Einlage aus einem Streckmetall aus Edelstahl. Für die Untersuchungen gemäß Tabelle 2 Fig. 3 und 4 wurde als Innenring ein reines, ungefülltes PTFE der Handelsbezeichnung LubriflonÖ von der Firma Angst + Pfister Zürich, Schweiz verwendet.

**TABELLE 2**

| **Spezifische Leckrate λ2,0 [mg/s*m] DIN 28090-2** | | |
|---|---|---|
| | **Stand der Technik** | **erfindungs- gemäße Dichtung** |
| **Innenring** | **ohne** | **PTFE rein** |
| **Temperatur** | **RT** | **RT** |
| ***novapress universal* (FA)** | 1,1E-01 | 2,0E-04 |
| **NOVATEC PREMIUM (FA)** | 8,0E-02 | 4,0E-04 |
| ***novaphit SSTC* (GR)** | 9,2E-02 | 1,0E-04 |
| Mittelwert | **9,3E-02** | **2,3E-04** |
| Dichtheitsklasse L *) | ≤ 10⁻¹ | < 10⁻³ |

| | | |
|---|---|---|
| *) nach DIN 28090-1 FA, GR = Werkstoffkurzzeichen nach DIN 28091 RT = Raumtemperatur | | |

## Patentansprüche

1. Dichtung, **dadurch gekennzeichnet, dass** die Dichtung mindestens zwei ineinander gefügte Dichtungskörper (A, B) unterschiedlichen Materials aufweist, wobei die Außenfläche des innenliegenden Dichtungskörpers (A) und die Innenfläche des benachbarten außenliegenden Dichtungskörpers (B) formschlüssig miteinander verbunden sind, wobei der innenliegende Dichtungskörper (A) einen thermoplastischen Kunststoff aufweist, und der außenliegende Dichtungskörper (B) ein Weichstoffdichtungsmaterial oder einen thermoplastischen Kunststoff aufweist, das eine größere Temperaturbeständigkeit und mechanische Standfestigkeit als die des innenliegenden Dichtungskörpers (A) aufweist, wobei der thermoplastische Kunststoff aus der Gruppe, bestehend aus Polyaryletheretherketon, Polyaryletherketon, Polyphenylensulfid, Polyarylsulfon, Polyethersulfon, Polyimid, Polyamid, Polyamidimid, fluorhaltigen Polymeren, ausgewählt ist und das Weichstoffdichtungsmaterial des Dichtungskörpers (B) aus armierungs- und blattbildenden Fasern, Füllstoffen, organischem Bindemittel und gegebenenfalls weiteren Zusatzstoffen, aus der Gruppe der Vulkanisations- und Verarbeitungshilfsmittel besteht, wobei als armierungsund blattbildende Fasern 2,0 - 5 Gew.% P-Polyaramidfasern sowie wenigstens 60 Gew.% Pudergraphit mit einer Kornverteilung von 90% < 70 µm oder expandierter Graphit eingesetzt wird.

2. Dichtung gemäß Anspruch 1, **dadurch gekennzeichnet, dass** der Dichtungskörper (A) eine Dichtungsdickenabmessung h_{D} aufweist, die wenigstens 10 % größer ist als die Dichtungsdickenabmessung des Dichtungskörpers (B).

3. Dichtung gemäß Anspruch 1 oder 2, **dadurch gekennzeichnet, dass** der innenliegende Dichtungskörper (A) mit dem benachbarten, außenliegenden Dichtungskörper (B) lösbar verbunden ist, so dass beim Ineinanderfügen der Dichtungskörper (A, B) ein Preßsitz entsteht.

4. Dichtung gemäß den Ansprüchen 1 bis 3, **dadurch gekennzeichnet, dass** die Dichtung zwischen den Dichtungskörpern (A, B) eine Zwischenschicht aus einem Material aufweist, dass die beiden Dichtungskörper dauerhaft miteinander verbindet.

5. Dichtung gemäß Anspruch 1, 2 oder 4, **dadurch gekennzeichnet**, welches zwischen den Dichtungskörpern eine mechanisch-formschlüssige Verbindung hergestellt ist.

6. Dichtung gemäß einem der vorhergehenden Ansprüche 1 bis 5, **dadurch gekennzeichnet, dass** sie ringförmig ist und die Dichtungsringe (A, B) konzentrisch ineinander liegen.

7. Dichtung gemäß einem der vorhergehenden Ansprüche 1 bis 6, **dadurch gekennzeichnet, dass** sie eine geometrische Form aus der Gruppe, aus Dreieck, Viereck, Polygon, ein aus Bogensegmenten bestehendes Flächengebilde, einnimmt.

8. Dichtung gemäß einem der vorhergehenden Ansprüche 1 bis 7, **dadurch gekennzeichnet, dass** in Abstimmung mit den Schraubenkräften die Dichtungsbreite (b_{D}) variabel gestaltet ist und somit eine nahezu gleichmäßige Flächenpressung am außenliegenden Dichtungskörper (B) erzielbar ist.

9. Dichtung gemäß einem der vorhergehenden Ansprüche 1 bis 8, **dadurch gekennzeichnet, dass** das Verhältnis der Breite des Dichtungskörpers, insbesondere des Innenrings (A) zur Breite des außenliegenden Dichtungskörpers (B), insbesondere des Außenringes (B), 1:3 bis 1:5, insbesondere 1:4 bis 1:5, beträgt.

10. Dichtung gemäß einem der vorhergehenden Ansprüche 1 bis 9, **dadurch gekennzeichnet, dass** der thermoplastische Kunststoff aus der Gruppe, bestehend aus Polyaryletheretherketon, Polyaryletherketon, Polyphenylensulfid, Polyarylsulfon, Polyethersulfon, Polyimid, Polyamid, Polyamidimid, fluorhaltigen Polymeren, ausgewählt ist.

11. Dichtung gemäß Anspruch 10, **dadurch gekennzeichnet, dass** die fluorhaltigen Polymere ausgewählt sind aus der Gruppe, bestehend aus Polytetrafluorethylen, Polyfluorethylenpropylen, Polyperfluoraloxy, Polytrifluorchlorethylen, Tetrafluorethylen-Hexafluorpropylen-Copolymerisat, Copolymerisate von Tetrafluorethylen mit Perfluoralkyvinylether, Copolymerisate von Ethylen und Tetrafluorethylen, Polyvinylidenfluorid, Terpolymerisate aus Ethylen, Tetrafluorethylen und Vinylidenfluorid, wobei gefülltes oder ungefülltes Polytetrafluorethylen bevorzugt ist.

12. Dichtung gemäß einem der Ansprüche 1 bis 10, **dadurch gekennzeichnet, dass** der thermoplastische Kunststoff des außenliegenden Dichtungskörpers (B) Polytetrafluorethylen ist.

13. Dichtung gemäß einem der vorhergehenden Ansprüche 1 bis 12, **dadurch gekennzeichnet, dass** der Dichtungskörper (A) einen Kern aus Metall, insbesondere aus mindestens einer Lage aus Streckmetall, aufweist.

14. Dichtung gemäß einem der vorhergehenden Ansprüche 1 bis 13, **dadurch gekennzeichnet, dass** der Innenring (A) für DIN- und ANSI-Flansche identisch ist und ausschließlich der Außenring (B) im Außendurchmesser (d_{außen}) unterschiedlich ist.
